Europäisches Patentamt

European Patent Office

Office européen des brevets

(11) Publication number: **0 184 380**
**A1**

(12) # EUROPEAN PATENT APPLICATION

(21) Application number: **85308628.8**

(22) Date of filing: **27.11.85**

(51) Int. Cl.⁴: **B 23 K 37/02**

(30) Priority: **04.12.84 GB 8430603**

(43) Date of publication of application:
**11.06.86 Bulletin 86/24**

(84) Designated Contracting States:
**DE FR IT NL SE**

(71) Applicant: **NATIONAL RESEARCH DEVELOPMENT CORPORATION**
**101 Newington Causeway**
**London SE1 6BU(GB)**

(72) Inventor: **Love, Jonathan Gaston**
**Bergsattersvag 78C**
**S-59151 Motala(SE)**

(74) Representative: **Parker, Geoffrey**
**Patent Department National Research Development Corporation 101 Newington Causeway**
**London SE1 6BU(GB)**

(54) **Autonomously-controllable self-propelling working apparatus.**

(57) An autonomously-controllable self-propelling working apparatus comprises a working tool (14) mounted on a carriage (10), the carriage having two coaxial, independently drivable, ground-engaging wheels (11, 12), and the tool being operable along a line of action cuncurrent with the common axis of said wheels in plan view. Each said wheel is preferably driven by a respective stepping motor coupled thereto by a belt which acts both as a turning belt for the motor and a tyre for the wheel. The carriage preferably has a tapered plan shape with the apex of such shape extending axially of said wheels and its base bridging one such wheel; such carriage preferably has castors (13) or other ground-engaging stabilisers at its basal extremities; and such carriage preferably has both forward (19) and transverse (18,20) obstruction sensors. Preferably also the working tool is reciprocably adjustable axially of said wheels.

Fig. 2

127510

## AUTONOMOUSLY-CONTROLLABLE SELF-PROPELLING
## WORKING APPARATUS

This invention has been conceived and developed in relation to the provision of an autonomously controllable apparatus including a welding torch mounted on a self-propelled carriage, which apparatus is suited to operation to effect downhand welds within individual cells of a box matrix structure such as in a ship's hull and it is convenient to describe the invention primarily with reference to such application. However the working tool need not necessarily be a welding torch but may be any other effector or transducer with a substantially predetermined line of action. Thus it is to be understood that the invention is applicable to other situations where such a tool is required to operate on a workpiece where the workpath is similarly defined by a base member and one or more neighbouring upright members.

Apparatus for this purpose has in fact been proposed in British Patent No. 1459103 but this particular apparatus appears potentially prone to disadvantages in operation by virtue of the form of drive arrangement employed for its carriage. The drive arrangement in question relies on a single drivable wheel associated with a ball castor and a sucker device, this last device being selectively operable at appropriate times to adhere to the base member on which the carriage is located for operation. This arrangement is, in itself, only capable of a single predetermined driving operation, namely, rotation of the carriage by the wheel about the sucker device when the latter is operated. Other driving operations, such as alongside an upright member, require continuing engagement of at least two guide rollers with an upright member. The arrangement is accordingly inflexible and may prove unreliable in some circumstances.

According to the present invention apparatus for the above purpose is improved by the employment of a drive arrangement comprising two coaxial independently drivable wheels located relative to the associated working tool so that in plan view the line of action of such tool is concurrent with the common axis of said wheels.

A benefit of this drive arrangement is that it is intrinsically more flexible in operation because it can drive in a linear manner by driving the two wheels in the same sense and at the same peripheral speed, or in a rotational manner about a range of points extending between and beyond the wheels by driving the wheels differentially in respect of sense and/or speed. Furthermore, because one such point will coincide with the point of action of the tool on the workpiece when viewed in plan, the operating direction of the carriage can be changed without moving the point of action. In the result various workpath configurations, including internal and external corners, can be tracked without loss of contact.

Also, as so far developed, it is peferred that each wheel be driven by a stepping motor by way of a belt which serves both as a timing belt for the motor operation and a tyre for the wheel. This is beneficial from various points of view. The use of stepping motors allows a greater variety and simplicity of control systems than is the case with other motor forms. The belt drive is useful in allowing the respective motor and an associated gearbox, which can be of a standard form, to be off-set from the wheel in an appropriate manner for economy of space within the apparatus and the belt can also act as a flexible transmission element, which is a relevant consideration to the use of a stepping motor as prime mover. In terms of drive ratios, the effective wheel diameter is that of the other rotary member about which the belt passes, which diameter can be smaller than that of the wheel while the rolling radius is that of the belted wheel. The use of the belt as a tyre will normally provide a thinner tyre profile than otherwise and so enhance vertical position stability by minimising tyre deflection below the wheel, while at the same time heat dissipation through the tyre is enhanced, and so also is durability through reduced wear because the effective tread length is increased.

While reference has been made to two drive wheels which, obviously, will act to support the carriage, it will normally be desirable to stabilise this support by way of further ground-engaging means in a mutually spaced array with the wheels. Suitably such means comprise two ball castors or other elements in opposed location about the wheel axis, and in a presently preferred arrangement these elements are opposed in like manner about such axis and towards one end of that part of the axis extending between the wheels. This last arrangement also preferably involves a carriage structure which is, in plan view, of delta or other tapered shape having its base spanning the two stabilising elements and its apex directed similarly to the associated working unit, such shaping being advantageous in relation to turning an internal corner.

The presently proposed apparatus will of course commonly require a guidance facility to enable a desired path to be followed. Such facility suitably includes mean to determine when the carriage is in a predetermined positional relationship relative to an upright member in the operating direction and also relative to such a member transverse to this direction. These means will normally provide data relevant to three basic guidance functions, namely, alignment of the carriage to track the length of an upright member, detection of carriage arrival at a corner between two upright members during the terminal portion of such tracking, and turning of the carriage in a corner while retaining alignment for tracking from one upright member to the next.

As presently developed, the proposed apparatus preferably employs means of physical contact sensor form for these last purposes.

A first such sensor is an active sensor extending from the carriage in the same sense as the line of action of the tool. In use the extension of this sensor is repeatedly adjusted to a further extension, and back again, sufficient to signal contact with a neighbouring upright member defining the workpath.

0184380

Tracking of the workpath is effected by steering the carriage such that the extension of this first sensor is maintained within predetermined bounds from the upright member.

Further contact sensors of fixed postional form are located on at least one side of the carriage relative to the operating direction to indicate first arrival at a corner and subsequent engagement while turning in that corner.

A further feature of the apparatus which normally will be appropriate for many purposes is the provision of a capability for positional adjustment of the working tool along its line of action. Such a capability facilitates the maintenance of a suitably uniform operating distance between the working unit and the subject workpath, particularly when turning a corner. Given such a capability, the first sensor mentioned above and the working unit can be interconnected and share a common adjustment mechanism.

Also, when such a working unit adjustment capability is provided, it will be normally preferred to provide a related capability for adjustment of the working unit in respect of its angle of elevation in the operational direction. These related capabilities allow maintenance of a suitably uniform angle of attack between the working unit and the subject workpath for a varying position of the carriage relative to the path. Also, the second of these capabilities allows the working unit to be oscillated to weave along the workpath.

In order to facilitate a further understanding of the invention, the same is described below, by way of example, with reference to the accompanying drawings, in which:-

Figures 1 and 2 schematically illustrate one embodiment of apparatus according to the invention respectively in plan and side views; and

Figure 3 diagrammatically illustrates an operational routine of such embodiment.

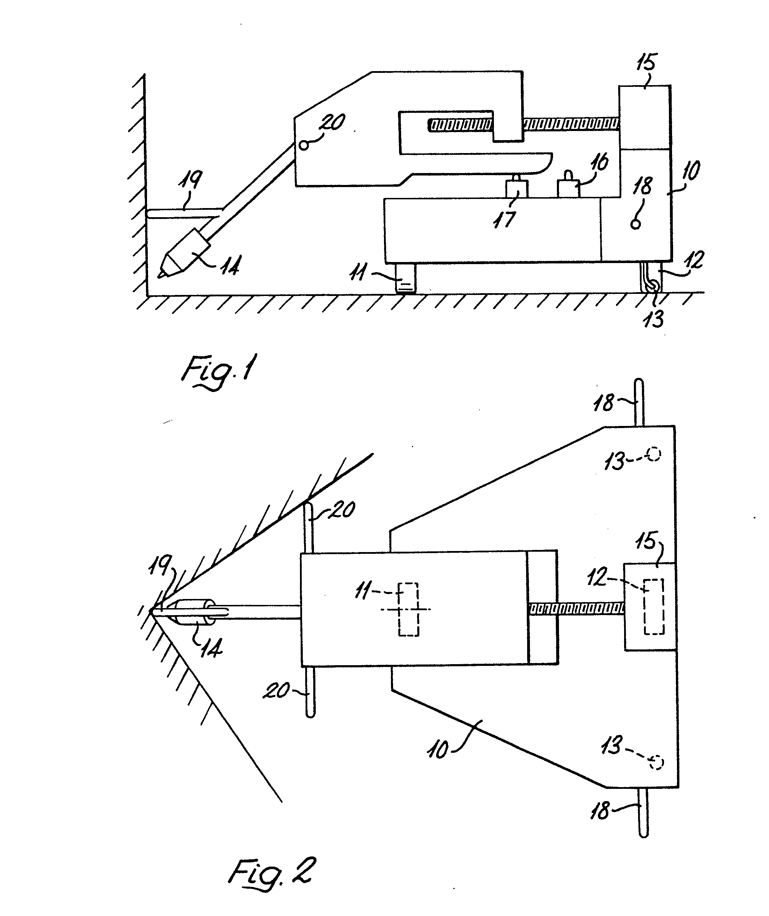

The embodiment of Figures 1 and 2 is intended for effecting downhand welds in the cells of a box matrix structure formed by a horizontal base plate and abutting mutually orthogonal walls.

The embodiment comprises a self-propelling carriage 10 of generally delta shape as seen in Figure 1. The carriage is supported by two like drivable wheels denoted respectively as the inner wheel 11 and the outer wheel 12, in association with a pair of like ball castor stabilisers 13. The wheels are independently belt-driven in coaxial manner, with the relevant axis extending along the medial plane of the delta shape, and the stabilisers are located in opposed manner about such axis adjacent respective basal wing tip portions of such shape.

The carriage supports, in turn, a welding torch 14 extending therefrom along the medial plane and from the apex of the delta shape. The torch is, more specifically, supported by the carriage in association with a servomechanism 15 operable to adjust the position of the torch inwardly and outwardly relative to the carriage in the direction of the wheel axis and operates two limit switches 16 and 17 respectively to indicate attainment of particular retracted and extended positions of adjustment.

The carriage is also provided with two contact sensors 18 respectively extending from its wing tips to indicate engagement with a wall. Further such sensors are provided on the torch, there being one denoted 19 operative forwardly of the torch and two denoted 20 which are operative in opposite senses transversely of the torch.

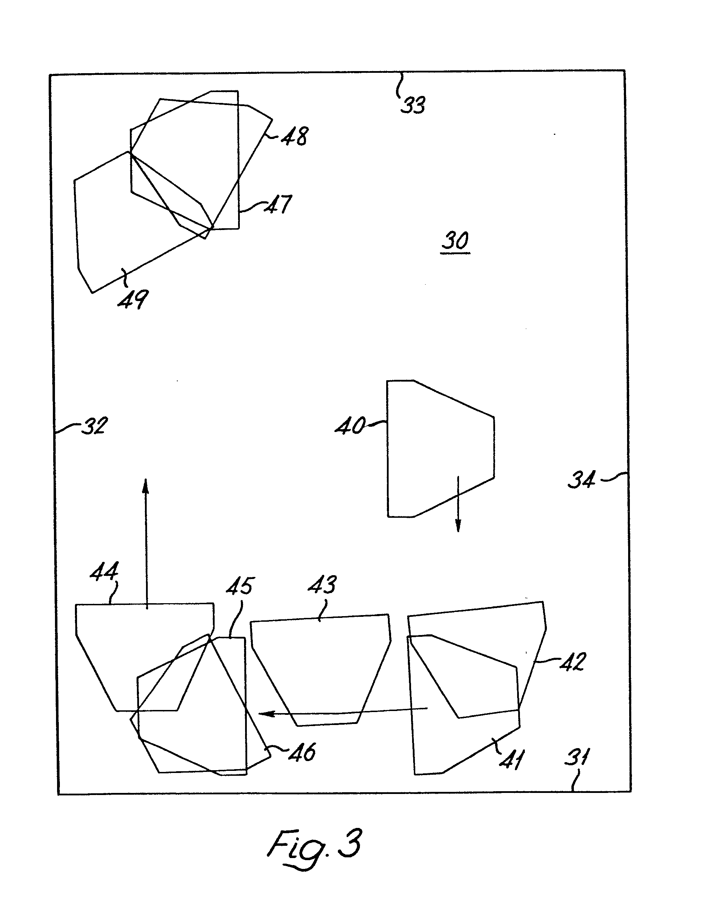

Turning to Figure 3: this illustrates an operational routine for the apparatus embodiment of Figures 1 and 2 in an individual rectangular cell formed by a base plate 30 and walls 31-34.

This routine is initiated by location of the apparatus, with the torch extended as determined by switch 17, on the base plate 30 within the cell in a position such as indicated at 40. The apparatus is then moved in self-propelling manner by like drive of its wheels towards a first wall 31 until the leading wing tip sensor 18 engages the same, whereat movement is stopped at position 41. The torch is then retracted, as determined by switch 16, and the carriage turned through 90° by driving the outer wheel about the inner wheel to assume position 42. The carriage is then driven again in like manner at both wheels while a sub-routine operation is carried out to determine the sense and magnitude of any misalignment with wall 31. This sub-routine involves extension of the torch following an initial translation movement from position 42 to position 43. If such extension produces contact with wall 31 by the torch forward sensor 19 before the extension limit switch 17 is operated, then the carriage is moving in an inclined manner towards the wall and the magnitude of such inclination can be determined by the relative extents of the carriage and torch movements which have occurred from position 42. Such inward misaligment is correctable by appropriate differential driving of the wheels to turn about the outer one. If torch extension following movement from position 42 produces no contact with wall 31 before switch 17 operates, the carriage is moving outwardly of the wall. This is corrected by differential drive of the wheels to turn the carriage about the inner wheel, in one or more steps, until an inward inclination occurs which is alignable as above.

Following alignment, the apparatus reaches the next wall 32 with the torch retracted, as indicated by wing tip sensor operation and movement is stopped at position 44. The carriage is turned from this position through $90^{o}$ by drivng the outer wheel about the inner wheel to position 45 and, with the torch progressively extended to sustain contact with wall 32, the carriage is then turned by driving the inner wheel about the outer wheel until the torch reaches the corner of walls 31 and 32 as indicated by contact of the leading torch transverse sensor 20 with wall 31 at position 46.

Welding then commences and the carriage is turned, together with a retracting adjustment of the torch, back to position 45 whereafter the carriage continues alongside wall 32 until the leading wing tip sensor contacts the next wall at position 47. At this last position the carriage is rotated about its outer wheel, while the torch is correspondingly extended to sustain contact at its forward sensor with wall 32 until the corner is reached as determined by the leading torch transverse sensor at position 48. Welding is then temporarily halted while the carriage is driven for rotation about the corner of walls 32 and 33 to a position 49 corresponding to position 46, whereafter welding alongside wall 33 is effected in similar manner to that of wall 32, and so on around the cell.

The illustrated apparatus will, of course, be operated in association with a suitable control system (not shown). This system can be of microcomputer form, plus an appropriate interface facility, and it can be located remotely of the carriage and working unit.

81B

CLAIMS

1. An autonomously-controllable self-propelling working apparatus comprising a working tool mounted on a carriage, the carriage having two coaxial, independently drivable, ground-engaging wheels, and the unit being operable along a line of action concurrent with the common axis of said wheels in plan view.

2. Apparatus according to Claim 1 wherein each of said wheels is drivably coupled to a respective stepping motor by way of a respective belt.

3. Apparatus according to Claim 2 wherein each said belt serves as a timing belt for its respective motor.

4. Apparatus according to Claim 2 or 3 wherein each said belt serves as a tyre for its respective wheel.

5. Apparatus according to any preceding claim wherein said carriage has further ground-engaging means located in a mutually spaced array with said wheels.

6. Apparatus according to Claim 5 wherein said further ground-engaging means includes two separate elements located in symmetrically opposed manner about the common axis of said wheels and towards one end of that part of said axis extending between said wheels.

7. Apparatus according to Claim 6 wherein said carriage is of tapered shape in plan view with the base of such shape spanning said elements and the apex of such shape extending axially of said wheels.

8. Apparatus according to any preceding claim comprising guidance sensor means operably reactive, to indicate the mutual spacing therebetween, with an upright member in the path of the apparatus when moving.

9. Apparatus according to Claim 8 wherein said guidance means comprise a first sensor element and at least one second sensor element respectively reactive with upright members located forwardly and transversely of said working unit line of action.

10. Apparatus according to Claim 9 wherein said sensor elements are each of physical contact form.

11. Apparatus according to Claim 10 wherein said first sensor element is reciprocably longitudinally adjustable relative to said line of action.

12. Apparatus according to Claim 10 wherein said working tool is reciprocably adjustable longitudinally of its line of action, and said first sensor element is movable with said tool.

13. Apparatus according to Claim 11 or 12 comprising a servomechanism operable to effect said reciprocable adjustment between two positions determined by limit switches.

14. Apparatus according to any one of Claims 9 to 13 wherein said working tool projects transversely beyond said carriage, said tool carries at least one second sensor element forwardly thereof relative to said line of action, and said carriage carries at least one further second sensor element rearwardly thereof relative to said line of action.

15. Apparatus according to any preceding claim wherein said working tool is adjustable in respect of the elevation angle of its line of action.

81B

Fig. 1

Fig. 2

0184380

*Fig. 3*

## DOCUMENTS CONSIDERED TO BE RELEVANT

EP 85308628.8

| Category | Citation of document with indication, where appropriate, of relevant passages | Relevant to claim | CLASSIFICATION OF THE APPLICATION (Int. Cl.4) |
|---|---|---|---|
| X | DE - A1 - 3 236 288 (VITKOVICE)  * Fig. 1 * | 1,5 | B 23 K 37/02 |
| A |  | 2-4, 6-15 | |
| | -- | | |
| X | DD - A - 155 498 (LANGER)  * Fig. 1-3 * | 1,5 | |
| | -- | | |
| X | US - A - 4 010 346 (CECIL)  * Fig. 1 * | 1,5 | |
| A | | 8 | |
| | -- | | |
| D,A | GB - A - 1 459 103 (MITSUBISHI)  * Fig. 1-10 * | | |
| | -- | | |
| X | EP - A2 - 0 109 201 (THE FRANKLIN)  * Fig. 3,4,5,9 * | 1,5 | |

TECHNICAL FIELDS
SEARCHED (Int. Cl.4)

B 23 K    5/00

B 23 K    7/00

B 23 K    9/00

B 23 K  37/00

B 25 J    5/00

The present search report has been drawn up for all claims

| Place of search | Date of completion of the search | Examiner |
|---|---|---|
| VIENNA | 06-03-1986 | BENCZE |